# EUROPÄISCHE PATENTANMELDUNG

(11) **EP 4 840 554 A1**
(43) Veröffentlichungstag der Anmeldung: **18.11.2026**
(21) Anmeldenummer: 25176246.4
(22) Anmeldetag: 14.05.2025
(51) Int. Cl.: B07C 3/02, B07C 3/08, B07C 5/36, B65G 47/46

(54) **SORTIERANORDNUNG UND VERFAHREN ZUM SORTIEREN VON GEGENSTÄNDEN**

(71) Anmelder: BEUMER Group GmbH & Co. KG, 59269 Beckum (DE)
(72) Erfinder: Wöhe, Markus, 44141 Dortmund (DE); Radner, Frederik, 59302 Oelde (DE)
(74) Vertreter: Angerhausen, Christoph

(57) **Zusammenfassung**

Die Erfindung betrifft eine Sortieranordnung (1) für das Sortieren von Gegenständen (2), insbesondere Postsendungen, wobei die Sortieranordnung (1) einen ersten Sorter (3), vorzugsweise einen Liegesorter, einen zweiten Sorter (4), vorzugsweise einen Taschensorter mit einer Mehrzahl Lastaufnahmemitteln, und eine Mehrzahl Abgabestellen (5) aufweist. Dabei ist der erste Sorter (3) zur Abgabe von Gegenständen (2) mit den Abgabestellen (5) verbunden, dadurch gekennzeichnet, dass wenigstens eine der Abgabestellen (5) einen Liegeförderer (6) aufweist und der zweite Sorter (4) für die Abgabe von Gegenständen (2) an die Abgabestelle (5) mit dem Liegeförderer (6) verbunden ist. Die Erfindung ist weiterhin auf ein Verfahren zum Sortieren von Gegenständen (2), vorzugsweise Postsendungen, insbesondere mit einer erfindungsgemäßen Sortieranordnung (1), gerichtet.

## Beschreibung

Die vorliegende Erfindung betrifft eine Sortieranordnung und ein Verfahren zum Sortieren von Gegenständen, vorzugsweise Postsendungen. Insbesondere bezieht sich die vorliegende Offenbarung auf eine Sortieranordnung mit einem ersten und einem zweiten Sorter sowie einer Mehrzahl von Abgabestellen, wobei eine verbesserte Abgabe von Gegenständen zwischen den Sortern und den Abgabestellen ermöglicht wird.

Auf dem Gebiet der automatisierten Sortierung von Gegenständen, insbesondere von Postsendungen, ist es üblich, Sortieranlagen einzusetzen, die eine Vielzahl von Sendungen nach bestimmten Kriterien, wie beispielsweise Zielort, Größe oder Gewicht, effizient und zuverlässig sortieren. Bekannte Systeme umfassen typischerweise verschiedene Sortiermodule, wie etwa Liegesorter, Taschensorter oder andere mechanische und automatisierte Fördereinrichtungen, die darauf ausgelegt sind, einen hohen Durchsatz bei gleichzeitig geringer Fehlerquote zu gewährleisten. Eine Kombination aus einem Liege- und einem Hängeförderer zum Fördern von Waren ist beispielsweise aus der EP 3 653 539 B1 bekannt.

Bei den bekannten Sortieranordnungen kann die Abgabe von zu sortierenden Gegenständen, beispielsweise durch Hängeförderer, wie Taschensorter, unmittelbar an einer Abgabestelle erfolgen, in die ein Liegesorter zu sortierende Gegenstände abgibt. Mithin können unterschiedliche Sortiermodule, beispielsweise ein Liegesorter und ein Taschensorter, zu sortierende Gegenstände mit demselben Sortierziel in dieselbe Endstelle abgeben. Dies kann jedoch zu Problemen bei der Abgabe führen, beispielsweise wenn an der Abgabestelle eine Verzögerung oder Stauung auftritt. Dies kann insbesondere in größeren Sortieranlagen bei der Verarbeitung von Gegenständen mit unterschiedlichem Zielort, Größe und/oder Gewicht vorkommen. Daraus ergibt sich ein Bedarf Sortieranlagen mit mehreren Sortern so auszugestalten, dass die Abgabe von Gegenständen für möglichst viele Betriebszustände zuverlässig erfolgen kann.

Es ist daher die Aufgabe der Erfindung, eine Sortieranordnung bereitzustellen, die eine besonders flexible, effiziente und zuverlässige Sortierung und Weiterleitung von Gegenständen unterschiedlicher Art und Größe ermöglicht und dabei einen hohen Automatisierungsgrad sowie eine optimierte Ausnutzung der vorhandenen Sortier- und Förderkapazitäten gewährleistet.

Diese Aufgabe wird durch eine Sortieranordnung mit den Merkmalen des Anspruchs 1 und einem entsprechenden Verfahren zum Sortieren von Gegenständen nach Anspruch 16 gelöst. Die abhängigen Ansprüche betreffen jeweils vorteilhafte Ausführungsformen der Erfindung.

Demgemäß ist eine Sortieranordnung vorgesehen, die für das Sortieren von Gegenständen, insbesondere Postsendungen, ausgelegt ist. Die Sortieranordnung umfasst einen ersten Sorter, der bevorzugt als Liegesorter ausgebildet ist, sowie einen zweiten Sorter, der vorzugsweise als Taschensorter mit mehreren Lastaufnahmemitteln ausgeführt ist. Darüber hinaus sind mehrere Abgabestellen vorgesehen. Der erste Sorter ist mit den Abgabestellen so verbunden, dass eine Abgabe von Gegenständen an diese ermöglicht wird. Dabei weist mindestens eine der Abgabestellen einen Liegeförderer auf, wobei der zweite Sorter mit dem Liegeförderer dieser Abgabestelle verbunden ist, um Gegenstände an diese abzugeben.

Unter einem Liegesorter wird hier eine Vorrichtung verstanden, die Gegenstände in liegender Orientierung sortiert, was insbesondere für große und sperrige Sendungen vorteilhaft ist. Der Liegesorter kann ein Quergurtsorter sein. Der Quergurtsorter kann eine Vielzahl unabhängig voneinander angetriebener oder miteinander verbundener Lastaufnahmemittel aufweisen. Die Lastaufnahmemittel können jeweils einen angetriebenen Gurtförderer aufweisen, welcher eine Förderrichtung senkrecht zur Vorschubrichtung der Lastaufnahmemittel aufweist.

Ein Taschensorter ist ein Sortiersystem, bei dem die zu sortierenden Gegenstände in einzelne, bewegliche Lastaufnahmemittel, sogenannte Taschen, aufgenommen und gezielt zu den jeweiligen Abgabestellen transportiert werden können. Ein Taschensorter eignet sich insbesondere für kleine und leichte Gegenstände. Weiterhin zeichnen sich Taschensorter durch einen gegenüber Liegesortern geringeren Platzbedarf aus.

Durch die Kombination eines ersten Sorters und eines zweiten Sorters ermöglicht die Sortieranordnung eine flexible und effiziente Handhabung von Gegenständen mit unterschiedlichen Eigenschaften, wie beispielsweise Größe, Gewicht und/oder Stabilität. So kann der erste Sorter beispielsweise als ein Liegesorter für große und sperrige Gegenstände ausgebildet sein. Der zweite Sorter kann wiederum als ein Taschensorter zum Transportieren von kleinen, empfindlichen Gegenständen konzipiert sein. Durch den Liegeförderer ermöglicht die Erfindung, dass Gegenstände des zweiten Sorters nicht unmittelbar an die Abgabestelle abgegeben werden. Das Abgeben der Gegenstände des zweiten Sorters lässt sich somit gezielt kontrollieren. So kann beispielsweise auch eine verbesserte Handhabung empfindlicher oder unterschiedlich gearteter Gegenstände erreicht werden.

Der Liegeförderer ist dabei bevorzugt so ausgebildet, dass ein abgelegter Gegenstand zumindest für eine kurze Zeitspanne auf dem Liegeförderer zum Liegen kommt, so dass ein Abgeben an die Abgabestelle kontrolliert erfolgen kann. Dabei kann alternativ oder zusätzlich vorgesehen sein, dass eine Längsausrichtung des Liegeförderers bzw. eine Fördererrichtung des Liegeförderers und eine Fördererrichtung des zweiten Sorters nicht parallel zueinander ausgerichtet sind, sondern einen Winkel größer null, beipsielsweise einen weitgehend rechtwinkligen Winkel zueinander aufweisen. Es kann auch vorgesehen sein, dass der Liegeförderer so ausgebildet ist, dass mehrere von dem zweiten Sorter abgegebene Gegenstände auf dem Liegeförderer gesammelt werden und dann gebündelt, also batchweise, an die Abgabestelle abgegeben werden.

Nach einer Ausführungsform ist der zweite Sorter oberhalb des Liegeförderers geführt und dazu eingerichtet, einen an die Abgabestelle abzugebenden Gegenstand auf den Liegeförderer abzuwerfen. Der zweite Sorter ist in einer räumlichen Anordnung also über dem Liegeförderer angeordnet, sodass eine direkte Übergabe der Gegenstände durch einen Abwurfvorgang, beispielsweise schwerkraftgetrieben, ermöglicht wird. So kann die Abgabe beispielsweise bei Ausführung des zweiten Sorters als Taschensorter derart erfolgen, dass die Taschen des Taschensorters oberhalb des Liegeförderers, insbesondere automatisch, entladen werden, vorzugsweise über eine Öffnung an einem unteren Ende der Taschen, so dass von den Taschen transportierte Gegenstände auf den Liegeförderer herunterfallen. Durch Auslegen eines Abstands zwischen dem Liegeförderer und dem zweiten Sorter kann eine Fallhöhe so eingestellt werden, dass eine schonende Übergabe der Gegenstände erreicht werden kann.

Vorzugsweise ist der Liegeförderer ein aktiver Förderer, vorzugsweise ein motorisch angetriebener Förderer. Besonders bevorzugt ist der Liegeförderer kontinuierlich oder diskontinuierlich angetrieben. Der Begriff "aktiver Förderer" bezeichnet dabei ein Förderelement, das nicht passiv durch Schwerkraft oder manuelle Eingriffe arbeitet, sondern durch eine eigene Antriebseinheit, typischerweise einen Elektromotor, in Bewegung versetzt werden kann. Dies ermöglicht eine gezielte und kontrollierte Bewegung der an die Abgabestelle abzugebenden Gegenstände auf dem Liegeförderer. Die Ausgestaltung als motorisch angetriebener Förderer erlaubt es, den Materialfluss unabhängig von äußeren Einflüssen oder der Schwerkraft zu steuern, was insbesondere bei variierenden Lasten oder unterschiedlichen Gegenstandsgrößen von Vorteil ist. Die Möglichkeit, den Liegeförderer entweder kontinuierlich oder diskontinuierlich zu betreiben, eröffnet zusätzliche Flexibilität im Sortierprozess: Ein kontinuierlicher Betrieb sorgt für einen gleichmäßigen, stetigen Transport der Gegenstände, was eine Durchsatzleistung erhöhen kann. Ein diskontinuierlicher Betrieb hingegen ermöglicht es, den Förderer gezielt zu stoppen oder zu starten, beispielsweise um eine exakte Übergabe der Gegenstände an die Abgabestelle zu ermöglichen. So kann beispielsweise auch eine batchweise Abgabe und/oder ein Reagieren auf Stauungen realisiert werden.

Die Ausbildung des Liegeförderers als aktiver Förderer kann dabei auch bedeuten, dass der Liegeförderer nur bereichsweise ein aktives Förderelement aufweist. So kann beispielsweise nur an einem vorderen Ende, einem hinteren Ende oder in einem mittleren Abschnitt ein aktives Förderelement vorgesehen sein.

Auch kann der Liegeförderer ein Förderband, ein Kettenförderer, eine Rollenbahn oder ein Gurtförderer sein oder aufweisen. Insbesondere kann er ein Förderband, einen Kettenförderer, eine Rollenbahn oder einen Gurtförderer bereichsweise aufweisen. Die Erfindung ermöglich dadurch eine kontrollierte Weitergabe der Gegenstände von dem Liegeförderer zur Abgabestelle.

Vorzugsweise weist wenigstens eine weitere der Abgabestellen den Liegeförderer auf und der Liegeförderer ist ausgebildet und eingerichtet, der wenigstens einen Abgabestelle und der wenigstens einen weiteren Abgabestelle Gegenstände zuzuführen. So ermöglicht die Erfindung, dass der Liegeförderer Gegenstände von dem zweiten Sorter nicht nur an einer einzigen, beispielsweise der wenigstens einen, Abgabestelle sondern zumindest an einer zweiten, beispielsweise der wenigstens einen weiteren, Abgabestelle abgeben kann. Eine Flexibilität der Sortieranordnung kann so weiter verbessert werden.

Dabei kann der Liegeförderer bevorzugt zwischen zwei Abgabestellen, etwa der wenigstens einen Abgabestelle und der weiteren Abgabestelle, angeordnet sein, so dass der Liegeförderer beiden Abgabestellen Gegenstände zuführen kann. Zum Zuführen kann der Liegeförderer insbesondere als ein aktiver Förderer ausgeführt sein oder einen solchen umfassen. Besonders bevorzugt kann der Liegeförderer zum Abgeben von Gegenständen an die Abgabestellen beweglich ausgeführt sein. So kann vorgesehen sein, dass der Liegeförderer in Axial- und/oder Querrichtung verstellbar ausgeführt ist. Alternativ oder zusätzlich kann vorgesehen sein, dass der Liegeförderer, insbesondere um eine Längsachse, zumindest bereichsweise rotierbar ausgeführt ist.

Weiterhin kann vorgesehen sein, dass der Liegeförderer eine Füllstandsüberwachung aufweist, die dazu eingerichtet ist, eine Stückzahl, ein Volumen, eine Fläche oder eine Abmessung mindestens eines von dem zweiten Sorter auf den Liegeförderer abgegebenen Gegenstands zu ermitteln. Die Ermittlung dieser Parameter ermöglicht eine kontinuierliche oder ereignisgesteuerte Überwachung des aktuellen Füllstands des Liegeförderers. So kann auch eine Füllstandsanzeige vorgesehen sein, über die Bedienpersonal ein Zu- und/oder Abführen von Gegenständen auf den Liegeförderer beziehungsweise von dem Liegeförderer anpassen kann. Bei einer Ausführung des Liegeförderers als ein aktiver Förderer kann das aktive Fördern des Liegeförderers insbesondere in Abhängigkeit von einem Ergebnis der Füllstandsüberwachung erfolgen. So kann ein Stauen von Gegenständen und auch ein Leerlauf des Liegeförderers vermieden oder aber eine Wahrscheinlichkeit dafür zumindest reduziert werden.

Die Füllstandsüberwachung kann alternativ oder zusätzlich dazu eingerichtet sein, ein Gesamtvolumen und/oder eine Gesamtfläche aller Gegenstände auf dem Liegeförderer zu ermitteln. So kann die Füllstandsüberwachung durch Vergleich mit einem Gesamtvolumen und/oder einer Gesamtfläche einen Füllstand bestimmen. Insbesondere kann die Füllstandsüberwachung basierend auf dem bestimmten Füllstand eine Meldung ausgeben, beispielsweise dass der Liegeförderer halb voll, voll oder überfüllt ist. Basierend auf dem Ermitteln kann die Füllstandsüberwachung bevorzugt auch eine Störung wie ein Blockieren von Gegenständen bestimmen und eine entsprechende Meldung ausgeben.

Gemäß einer Weiterbildung weist der Liegeförderer einen Zwischenspeicher für die Aufnahme mehrerer von dem zweiten Sorter auf den Liegeförderer abgegebener Gegenstände auf. Dadurch ermöglicht der Liegeförderer eine temporäre Aufnahme und Pufferung mehrerer Gegenstände, bevor diese an die Abgabestelle weitergegeben werden. So kann beispielsweise auch bei einer Stauung in der Abgabestelle der Sortierprozess zumindest für eine gewisse Zeitspanne störungsfrei weiterlaufen.

Weiterhin kann der Liegeförderer, vorzugsweise ein Zwischenspeicher des Liegeförderers, eine Kammer zur Aufnahme von Gegenständen aufweisen, wobei diese Kammer mit einem verschließbaren Auslass versehen ist. Als Kammer wird hier ein definierter Bereich des Liegeförderers verstanden, in dem einzelne oder mehrere Gegenstände gesammelt und vorübergehend aufbewahrt werden können, bevor sie einer weiteren Verarbeitung oder Sortierung zugeführt werden. Der verschließbare Auslass der Kammer ermöglicht es, den Zugang zu den in der Kammer befindlichen Gegenständen gezielt zu steuern, sodass ein kontrolliertes Abgeben der Gegenstände realisiert werden kann. Hierdurch wird eine gezielte Zwischenpufferung und Freigabe von Gegenständen innerhalb der Sortieranordnung ermöglicht, was insbesondere bei schwankenden Zuführmengen oder bei kurzzeitigen Störungen im nachfolgenden Sortierprozess vorteilhaft ist.

Dabei kann der verschließbare Auslass oberhalb eines Fördermittels des Liegeförderers angeordnet sein, wobei als Fördermittel insbesondere ein Förderband, ein Kettenförderer oder ein Gurtförderer eingesetzt werden kann. Durch die Anordnung des verschließbaren Auslasses oberhalb des Fördermittels wird eine gezielte, insbesondere schwerkraftgetriebene, Übergabe der zu sortierenden Gegenstände auf das Fördermittel des Liegeförderers ermöglicht. Bevorzugt kann der Auslass steuerbar ausgeführt sein und beispielsweise in Abhängigkeit eines Füllstands des Fördermittels und/oder der Abgabestelle gesteuert werden.

Nach einer Ausführungsform weist mindestens eine der Abgabestellen eine Übergabeeinrichtung, vorzugsweise eine Rutsche, insbesondere eine Wendelrutsche, auf oder mindestens eine der Abgabestellen ist als eine solche Übergabeeinrichtung ausgeführt, wobei sowohl der erste Sorter als auch der zweite Sorter für die Abgabe von Gegenständen mit der Übergabeeinrichtung verbunden sind. Die Übergabeeinrichtung stellt dabei ein technisches Mittel dar, das die kontrollierte Übergabe der auf dem Liegeförderer transportierten Gegenstände und der von dem ersten Sorter abgegeben Gegenstände an eine weitere Verarbeitungseinheit, beispielsweise einen weiteren Förderer, eine Sortierstation oder eine Endstelle, ermöglicht. Durch eine Ausführung als Rutsche kann die Übergabeeinrichtung die Gegenstände ohne ein aktives Fördern weitertransportieren und das Zuführen der Gegenstände durch den ersten und den zweiten Sorter kann beispielsweise auf unterschiedlichen Höhen erfolgen. Auch bei einer Ausführung als Rutsche kann aber vorgesehen sein, dass die Übergabeeinrichtung ein aktives Förderelement aufweist.

Dabei kann vorgesehen sein, dass der Liegeförderer für die Abgabe von Gegenständen mit der Übergabeeinrichtung verbunden ist. So kann eine Übergabe der Gegenstände des zweiten Sorters von dem Liegeförderer an die Übergabeeinrichtung vereinfacht werden.

Gemäß einer Weiterbildung kann die Abgabestelle, insbesondere die Übergabeeinrichtung, eine Füllstandsüberwachung aufweisen, die dazu eingerichtet ist, eine Stückzahl, ein Volumen, eine Fläche oder eine Abmessung mindestens eines von dem ersten Sorter und/oder dem zweiten Sorter an die Abgabestelle abgegebenen Gegenstands zu ermitteln. Die Füllstandsüberwachung stellt ein technisches Mittel dar, das kontinuierlich oder in definierten Intervallen den aktuellen Füllstand der Abgabestelle erfasst. So kann mittels der Füllstandsüberwachung beispielsweise ein Bestimmen einer Anzahl der sich in der Abgabestelle befindlichen Gegenstände, deren Gesamtvolumen, deren Gesamtfläche oder deren Abmessungen realisiert sein. So kann die Füllstandsüberwachung beispielsweise durch Vergleich mit einem Maximalvolumen und/oder einer Maximalflächeder Abgabestelle einen Füllstand der Abgabestelle bestimmen. Insbesondere kann die Füllstandsüberwachung basierend auf dem bestimmten Füllstand eine Meldung ausgeben, beispielsweise dass die Abgabestelle halb voll, voll oder überfüllt ist. Basierend auf dem Ermitteln kann die Füllstandsüberwachung bevorzugt auch eine Störung wie ein Blockieren von Gegenständen bestimmen und eine entsprechende Meldung ausgeben.

Durch die Füllstandsüberwachung kann eine Überfüllung der Abgabestelle vermieden werden, was wiederum Störungen im Materialfluss vorbeugt und eine kontinuierliche Sortierleistung sicherstellt. Zudem kann durch die Erfassung der Stückzahl, des Volumens, der Fläche oder der Abmessungen eine bedarfsgerechte Steuerung des ersten Sorters, des zweiten Sorters, des Liegeförderers und/oder von nachfolgenden Prozessen, wie etwa das Ansteuern weiterer Förderbänder oder das Auslösen von Abtransportvorgängen, erfolgen. So kann beispielsweise ein Antreiben des Liegeförderers, ein Betätigen eines Auslasses einer Kammer des Liegeförderers und/oder das Nutzen eines Zwischenspeichers des Liegeförderers basierend auf der Füllstandsüberwachung der Abgabestelle erfolgen.

Dabei kann die Füllstandsüberwachung des Liegeförderers und/oder der Abgabestelle eine Sensoreinheit aufweisen, die insbesondere als ein optischer Sensor, ein akustischer Sensor, ein kapazitiver Sensor, ein induktiver Sensor und/oder ein Radarsensor ausgeführt ist oder einen solchen umfasst. Die Sensoreinheit dient dazu, den Füllstand zuverlässig zu erfassen. Die Ausgestaltung der Sensoreinheit als optischer Sensor ermöglicht beispielsweise eine berührungslose Erfassung des Füllstandes durch Lichtschranken oder Kamerasysteme, wodurch eine schnelle und präzise Detektion von Gegenständen auf dem Liegeförderer oder in der Übergabeeinrichtung erreicht werden kann. Ein akustischer Sensor, etwa in Form eines Ultraschallsensors, kann unabhängig von der optischen Transparenz oder Verschmutzung der Umgebung arbeiten und eignet sich daher besonders für raue Umgebungen oder bei wechselnden Lichtverhältnissen. Ein kapazitiver Sensor erkennt Veränderungen im elektrischen Feld und kann so auch nicht-metallische Gegenstände detektieren, was insbesondere bei gemischtem Sortiergut vorteilhaft ist. Induktive Sensoren ermöglichen die Erfassung metallischer Gegenstände und bieten eine robuste Lösung für spezielle Anwendungen, während Radarsensoren eine hohe Reichweite und Unempfindlichkeit gegenüber Staub oder anderen Umwelteinflüssen bieten, sodass auch bei schwierigen Umgebungsbedingungen eine zuverlässige Füllstandserkennung gewährleistet werden kann. Durch die Integration einer solchen Sensoreinheit wird eine kontinuierliche Überwachung des Füllstandes ermöglicht, wodurch eine automatische Steuerung der Sortierprozesse, etwa das gezielte Zuführen oder Stoppen von Gegenständen, realisiert werden kann. Dies trägt dazu bei, Stauungen oder Überfüllungen zu vermeiden, die Effizienz der Sortieranordnung zu erhöhen und einen unterbrechungsfreien Betrieb sicherzustellen.

Zusätzlich kann die Sensoreinrichtung genutzt werden, um einen Überlauf des Liegeförderers und/oder der Übergabeeinrichtung zu erkennen, indem die Füllstandsüberwachung anhand des Sensorsignals eine kritische Füllstandsüberschreitung oder ein Blockieren des Liegeförderers und/oder der Übergabeeinrichtung registriert und ein entsprechendes Signal zur Anpassung des Materialflusses ausgibt. So kann für die Übergabeeinrichtung beispielsweise vorgesehen sein, ein Zusammenführen der beiden Artikelströme des ersten und des zweiten Sorters, zumindest temporär, zu stoppen. Außerdem könnte von der Füllstandsüberwachung ein Signal ausgegeben werden, das ein Abgeben weiterer Gegenstände von dem ersten Sorter und/oder von dem zweiten Sorter verhindert oder aber den ersten Sorter und/oder den zweiten Sorter veranlasst, weitere Gegenstände, zumindest temporär, an einer anderen Abgabestelle abzugeben.

Als optischer Sensor kann beispielsweise eine Lichtschranke wie eine Einweg- oder Reflexionslichtschranke vorgesehen sein. So ermöglicht die Sensoreinheit ein Erfassen des Füllstands durch Unterbrechung eines Lichtstrahls. Insbesondere kann eine solche Lichtschranke oder ein anderer optischer Sensor eine gesamte Breite des Liegeförderers oder der Abgabestelle, insbesondere der Übergabeeinrichtung, erfassen. Auch kann als optischer Sensor ein Laser-Distanzsensor vorgesehen sein, der ein Messen der Entfernung zur Oberfläche des Gegenstands erlaubt. Weiterhin kann als optischer Sensor ein Kamerasystem mit Bilderkennung (Machine Vision) vorgesehen sein. So können auch KIgestützte Analysen zur Bestimmung des Füllstands genutzt werden. Auch kann als optischer Sensor ein Time-of-Flight (ToF)-Sensor vorgesehen sein. Dieser erlaubt ein Messen der Lichtlaufzeit zur Gegenstandsoberfläche, um einen Abstand des Gegenstands zu berechnen.

Als akustischer Sensor kann ein Ultraschallsensor vorgesehen sein. Durch Aussenden von Schallwellen und Messen der Laufzeit des reflektierten Signals kann eine Bestimmung des Abstands zur Gegenstandsoberfläche erfolgen.

Als kapazitiver Sensor kann ein kapazitiver Füllstandssensor vorgesehen sein. Dieser erlaubt ein Messen von Änderungen der elektrischen Kapazität abhängig vom Füllstand. Ein kapazitiver Sensor ist besonders geeignet für einen nichtmetallischen Liegeförderer und/oder eine nichtmetallische Übergabeeinrichtung und nichtmetallische Schüttgüter.

Als induktiver Sensor kann ein induktiver Näherungssensor vorgesehen sein. Dieser ermöglicht ein Messen des Füllstands von metallischen Objekten in der Übergabeeinrichtung und/oder auf dem Liegeförderer.

Als Radarsensor kann ein FMCW-Radarsensor (Frequenzmodulierter kontinuierlicher Wellenradar) vorgesehen sein. Dieser ermöglicht eine hochpräzise Messung des Füllstands durch Reflexion elektromagnetischer Wellen und ist besonders für staubige Umgebungen geeignet.

Das Erfassen der einzelnen Gegenstände kann dabei auf dem Liegeförderer und/oder der Übergabeeinrichtung oder aber auch in Förderrichtung stromaufwärts des Liegeförderers und/oder der Übergabeeinrichtung erfolgen. Basierend auf dem Erfassen kann die Füllstandsüberwachung dann ein Fülllstandsmodell entwickeln. So kann beispielsweise vorgesehen sein, dass die Füllstandsüberwachung basierend auf dem Erfassen bestimmt, wie viele Gegenstände von dem Liegeförderer und/oder der Übergabeeinrichtung entnommen werden, wie viele Gegenstände auf den Liegeförderer und/oder die Übergabeeinrichtung abgegeben werden und/oder wie voll der Liegeförderer und/oder die Übergabeeinrichtung ist.

Die Füllstandsüberwachung kann beispielsweise auch ein Gewicht von Gegenständen berücksichtigen und basierend darauf durch den ersten und/oder den zweiten Sorter abzugebende Gegenstände so sequenzieren, dass Gegenstände zusammengedrückt werden können, um einen verfügbaren Platz auf dem Liegeförderer und/oder in der Übergabeeinrichtung vorteilhaft auszunutzen. So können kleine Polybags zuerst abgegeben werden und schwerere Gegenstände danach, um die Polybags zu pressen.

Nach einer Ausführungsform umfasst die Sortieranordnung mindestens einen Abförderer, der bevorzugt als Auslegerförderer und besonders bevorzugt als Gurtförderer ausgestaltet ist. Dabei ist der Abförderer dazu eingerichtet, von dem ersten Sorter und dem zweiten Sorter an einer Abgabestelle abgegebene Gegenstände zu einer Sortierendstelle zu befördern. Der Begriff "Abförderer" bezeichnet dabei ein Fördermittel, das die Funktion übernimmt, sortierte Gegenstände, wie beispielsweise Postsendungen, nach deren Übergabe an eine Abgabestelle weiterzutransportieren. Ein Auslegerförderer ist typischerweise ein Förderband, das seitlich oder in Verlängerung einer Abgabestelle angeordnet ist und die Gegenstände gezielt aufnimmt und weiterleitet. Besonders bevorzugt wird ein Gurtförderer oder ein Teleskopförderer eingesetzt, der durch seine kontinuierliche und schonende Förderweise für eine sichere und beschädigungsfreie Weiterleitung der Gegenstände sorgt.

Die Sortierendstelle kann dabei als eine Wechselbrücke, ein Wechselbehälter und/oder ein Transportmedium ausgeführt sein oder umfassen, wobei bevorzugt eine Ausführung als Rollbehälter oder Sack vorgesehen ist. Die Sortierendstelle stellt dabei das Ziel der sortierten Gegenstände dar, an dem diese nach dem Sortierprozess gesammelt und für den Weitertransport bereitgestellt werden. Der Begriff Wechselbrücke bezeichnet hierbei ein austauschbares Ladegefäß, das typischerweise auf Lkw-Fahrgestellen transportiert wird und einen schnellen Wechsel zwischen verschiedenen Transportmitteln ermöglicht. Ein Wechselbehälter ist ein flexibles Transportbehältnis, das sich insbesondere für den innerbetrieblichen Transport und die Zwischenlagerung von Postsendungen eignet. Das Transportmedium kann dabei jede Vorrichtung sein, die zur Aufnahme und zum Weitertransport der sortierten Gegenstände dient, wobei insbesondere Rollbehälter - fahrbare Behälter mit Rollen - und Säcke - flexible Behältnisse aus Gewebe oder Kunststoff - bevorzugt sind.

Das Beladen der Sortierendstelle kann dabei manuell und/oder automatisch erfolgen. So kann der Abförderer die Gegenstände aktiv an die Sortierendstelle abgeben oder aber durch eine die Sortieranordnung bedienende Person unterstützt werden. Auch kann eine robotergestützte Beladung der Sortierendstelle vorgesehen sein, beispielsweise indem das Beladen durch einen Roboter durchgeführt und/oder unterstützt wird.

Nach einer Ausführungsform umfasst die Sortieranordnung einen dritten Sorter, der vorzugsweise als mobiler Roboter, insbesondere als fahrerloses Transportfahrzeug, ausgestaltet ist, wobei dieser dritte Sorter ausgebildet und eingerichtet ist, einen Gegenstand zu wenigstens einer der Mehrzahl von Abgabestellen zu transportieren und mit der wenigstens einen Abgabestelle, vorzugsweise mit einer Übergabeeinrichtung der wenigstens einen Abgabestelle, zumindest temporär verbindbar ist. Der Begriff "mobiler Roboter" bezeichnet dabei ein autonom oder teilautonom agierendes Transportsystem, das sich innerhalb der Sortieranordnung unabhängig von fest installierten Fördermitteln bewegen kann. Ein fahrerloses Transportfahrzeug stellt eine bevorzugte Ausführungsform eines solchen mobilen Roboters dar und ist typischerweise mit Navigations- und Steuerungseinheiten ausgestattet, die eine gezielte Anfahrt verschiedener Abgabestellen ermöglichen.

Die temporäre Verbindbarkeit mit einer Abgabestelle, insbesondere mit einer Übergabeeinrichtung, bedeutet, dass der dritte Sorter für die Dauer des Übergabevorgangs mit der Abgabestelle gekoppelt werden kann, um einen sicheren und zuverlässigen Transfer des Gegenstands zu gewährleisten.

Durch die Integration eines dritten, mobilen Sorters wird eine erhöhte Flexibilität der Sortieranordnung erreicht, da Gegenstände zusätzlich unabhängig von festen Förderwegen gezielt und bedarfsgerecht an unterschiedliche Abgabestellen transportiert werden können. Dies ermöglicht eine dynamische Anpassung an wechselnde Sortieranforderungen, eine Reduzierung von Engpässen an fest installierten Förderstrecken und eine effizientere Nutzung der vorhandenen Sortierkapazitäten.

Der dritte Sorter kann, insbesondere bei Ausführung als mobiler Roboter, sowohl zum Transportieren eines Gegenstands zu einer Abgabestelle als auch zum Beladen an der Sortierendstelle einsetzbar sein. So kann beispielsweise vorgesehen sein, dass der dritte Sorter je nach Auslastung beim Beladen an der Sortierstelle unterstützt oder einen oder mehrere Gegenstände zu einer Abgabestelle transportiert. So kann eine Flexibilität der Sortieranordnung gesteigert und eine Stillstandszeit des dritten Sorters reduziert werden.

Ein weiterer Aspekt der Erfindung betrifft ein Verfahren zum Sortieren von Gegenständen, vorzugsweise Postsendungen, insbesondere mit einer erfindungsgemäßen Sortieranordnung. Bei dem Verfahren ist vorgesehen mit einem ersten Sorter Gegenstände entsprechend ihrem Sortierziel an einer einer Mehrzahl mit dem ersten Sorter verbundener Abgabestellen abzugeben und mit einem zweiten Sorter Gegenstände entsprechend ihrem Sortierziel an einer der Mehrzahl Abgabestellen abzugeben. Dabei weist das Sortieren mit dem zweiten Sorter das Abgeben des in einem der Lastaufnahmemittel des zweiten Sorters gehaltenen Gegenstands auf einen Liegeförderer auf.

Dadurch wird der Vorteil erreicht, dass durch die Übergabe auf einen Liegeförderer eine besonders flexible Weiterverarbeitung der sortierten Gegenstände ermöglicht wird. Der Liegeförderer kann beispielsweise als Puffer dienen, wodurch sich die Sortierkapazität und die Anpassungsfähigkeit an unterschiedliche Förder- und Sortieranforderungen erhöht.

Vorzugsweise kann vorgesehen sein, dass Gegenstände des ersten Sorters und des zweiten Sorters, welche dasselbe Sortierziel aufweisen, an derselben Abgabestelle abgegeben werden. Weiterhin kann der Liegeförderer diskontinuierlich angetrieben sein und der erste Sorter und der zweite Sorter vorzugsweise kontinuierlich betrieben werden. Bevorzugt kann der Liegeförderer abhängig von einem Füllstand von Gegenständen auf dem Liegeförderer angetrieben werden.

Auch kann vorgesehen sein, dass die Gegenstände von dem zweiten Sorter in eine Kammer mit einem verschließbaren Verschluss zur Zwischenpufferung abgegeben werden, wobei der Verschluss geöffnet wird, um die Gegenstände aus der Kammer auf den Liegeförderer schwerkraftgetrieben zu entleeren. Weiterhin kann das Abgeben der Gegenstände mit dem zweiten Sorter an eine der Abgabestellen das Fördern und Einschleusen der Gegenstände in eine Übergabeeinrichtung der Abgabestelle aufweisen.

Die erfindungsgemäße Sortieranordnung ist insbesondere zur Durchführung des erfindungsgemäßen Verfahrens geeignet. Die für die erfindungsgemäße Sortieranordnung offenbarten Details und Vorteile sind auf das erfindungsgemäße Verfahren übertrag- und anwendbar und umgekehrt.

Weitere Einzelheiten der Erfindung werden anhand der nachstehenden Figuren erläutert. Dabei zeigt:
- Figur 1: eine seitliche Ansicht eines Ausführungsbeispiels einer erfindungsgemäßen Sortieranordnung;
- Figur 2: eine Draufsicht eines weiteren Ausführungsbeispiels einer erfindungsgemäßen Sortieranordnung;
- Figur 3a: eine Draufsicht einer Ausführungsform einer Übergabeeinrichtung einer erfindungsgemäßen Sortieranordnung mit einem ersten Füllstand;
- Figur 3b: eine Draufsicht der Ausführungsform einer Übergabeeinrichtung einer erfindungsgemäßen Sortieranordnung aus Figur 3a mit einem zweiten Füllstand; und
- Figur 4: eine Draufsicht eines weiteren Ausführungsbeispiels einer erfindungsgemäßen Sortieranordnung mit einer weiteren Abgabestelle.

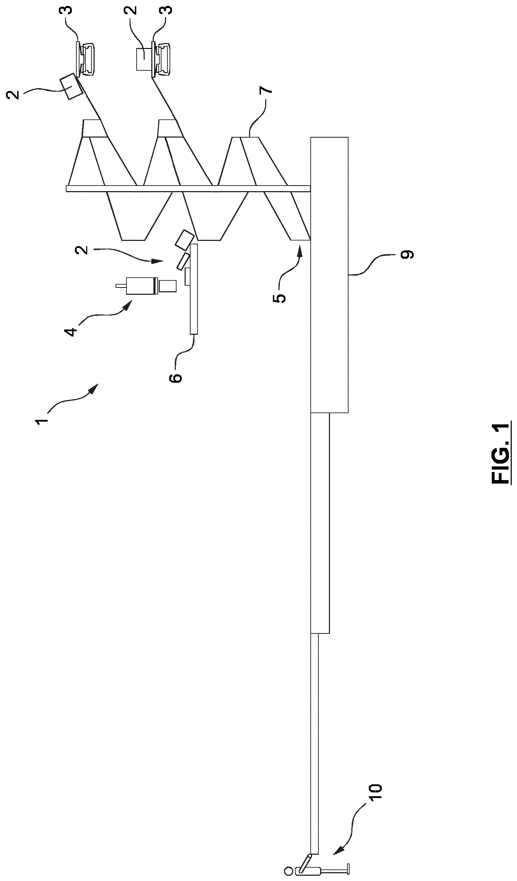

Figur 1 zeigt eine seitliche Ansicht einer Ausführungsform einer Sortieranordnung 1 für das Sortieren von Gegenständen 2, insbesondere Postsendungen. Die Sortieranordnung 1 weist hierzu einen ersten Sorter 3 auf, der zwei übereinander angeordnete Liegesorter umfasst. Weiterhin weist die Sortieranordnung einen zweiten, als Taschensorter mit einer Mehrzahl Lastaufnahmemitteln ausgeführten Sorter 4 auf sowie eine Mehrzahl Abgabestellen 5. Die Lastaufnahmemittel des Taschensorters 4 sind dabei als Taschen ausgeführt, die entlang einer Führungsschiene geführt sind. Figur 1 zeigt dabei eine einzelne Abgabestelle 5 der Mehrzahl Abgabestellen. Die weiteren Abgabestellen 5 können beispielsweise in einer Sichtachse hinter und vor der gezeigten Abgabestelle 5 angeordnet sein und ebenfalls von den Liegesortern 3 und/oder dem Taschensorter 4 mit Gegenständen versorgt werden.

Die gezeigte Abgabestelle 5 weist einen Liegeförderer 6 auf und der Taschensorter 4 ist für die Abgabe von Gegenständen 2 an die Abgabestelle 5 mit dem Liegeförderer 6 verbunden. Damit ist die gezeigte Sortieranlage 1 insbesondere geeignet ein Verfahren zum Sortieren von Gegenständen 2, vorzugsweise Postsendungen, durchzuführen, bei dem
- mit den Liegesortern 3 Gegenstände 2 entsprechend ihrem Sortierziel an der mit den Liegesortern 3 verbundenen Abgabestelle 5 abgegeben werden, und
- mit dem Taschensorter 4 Gegenstände 2 entsprechend ihrem Sortierziel ebenfalls an der Abgabestelle 5 abgegeben werden,
wobei das Sortieren mit dem Taschensorter 4 das Abgeben des in einem der Taschen des Taschensorters 4 gehaltenen Gegenstands 2 auf dem Liegeförderer 6 aufweist.

Dadurch ermöglicht die Sortieranlage 1 ein indirektes Abgeben an der Abgabestelle 5 durch den Taschenförderer 5, womit, beispielsweise durch eine Pufferung von Gegenständen 2, eine höhere Flexibilität beim Sortieren, insbesondere beim Zusammenführen der Warenströme von den Liegesortern 3 und vom Taschensorter 4 erreicht wird. Dabei kann auch vorgesehen sein, dass alle Gegenstände 2 der Liegesorter 3 und des Taschensorters 4, die an der in Figur 1 gezeigten Abgabestelle 5 abgegeben werden, dasselbe Sortierziel aufweisen.

Der Taschensorter 4 ist hierzu oberhalb des Liegeförderers 6 geführt und dazu eingerichtet, einen an die Abgabestelle 5 abzugebenden Gegenstand 2 auf den Liegeförderer 6 abzuwerfen. Hierzu können die Taschen des Taschensorters 4 beispielsweise automatisch entleerbar ausgeführt sein. Eine Ausrichtung des Liegeförderers 6 ist hier orthogonal zu einer Förderrichtung des Taschensorters 4 ausgerichtet, so dass die Gegenstände 2 der Abgabestelle 5 kontrolliert zugeführt werden können.

Für die Zuführung zur Abgabestelle 5 ist Liegeförderer 6 als ein aktiver Förderer ausgeführt, vorzugsweise ein motorisch angetriebener Förderer, wobei der Liegeförderer 6 insbesondere auch diskontinuierlich angetrieben werden kann. Somit ermöglicht es die Sortieranordnung 1 ein Zuführen von Gegenständen 2 des Taschensorters 4 zu der Abgabestelle 5 zu unterbrechen, beispielsweise, um eine batchweise Zuführung zu ermöglichen oder auf eine Stauung an der Abgabestelle 5 zu reagieren. Bevorzugt kann vorgesehen sein, dass der Liegeförderer 6 abhängig von einem Füllstand von Gegenständen 2 auf dem Liegeförderer 6 angetrieben wird. Der Liegeförderer 6 kann dabei als ein Förderband, ein Kettenförderer oder ein Gurtförderer ausgeführt sein oder ein solches Förderelement zumindest bereichsweise aufweisen.

Die in Figur 1 gezeigt Abgabestelle 5 weist eine als Wendelrutsche ausgeführte Übergabeeinrichtung 7 auf, wobei sowohl die Liegesorter 3 als auch der Taschensorter 4 für die Abgabe von Gegenständen 2 mit der Übergabeeinrichtung 7 verbunden sind. Durch das Ausführen der Übergabeeinrichtung 7 als Wendelrutsche ermöglicht die Sortieranordnung 1, dass die Gegenstände 2 der Liegesorter 3 auf unterschiedlichen Höhen zugeführt werden können. Weiterhin kann die Zuführung über den Liegeförderer 6 und damit des Taschensorters 4 auf einer gegenüberliegenden Seite erfolgen. Die Wendelrutsche 4 ermöglicht somit eine vorteilhafte Ausnutzung einer verfügbaren Fläche für die Sortieranordnung 1. Durch das Ausführen der Übergabeeinrichtung 7 als Rutsche wird insbesondere eine schwerkraftgetriebene Zuführung der Gegenstände 2 zur Abgabestelle 5 ermöglicht.

Für die Abgabe von Gegenständen 2 ist der Liegeförderer 6 insbesondere mit der Übergabeeinrichtung 7 verbunden. So kann beispielsweise ein Herunterfallen von Gegenständen 2 vermieden werden.

Die Sortieranordnung 1 weist weiterhin einen als Teleskopgurtförderer ausgeführten Abförderer 9 auf, der dazu eingerichtet ist, von den Liegesortern 3 und dem Taschensorter 4 an der Abgabestelle 5 abgegebene Gegenstände 2 zu einer Sortierendstelle 10 zu befördern. Durch das Ausführen als Teleskopförderer 9 kann insbesondere eine Länge des Abförderers 9 an unterschiedliche Anforderungen der Sortierendstelle 10 angepasst werden.

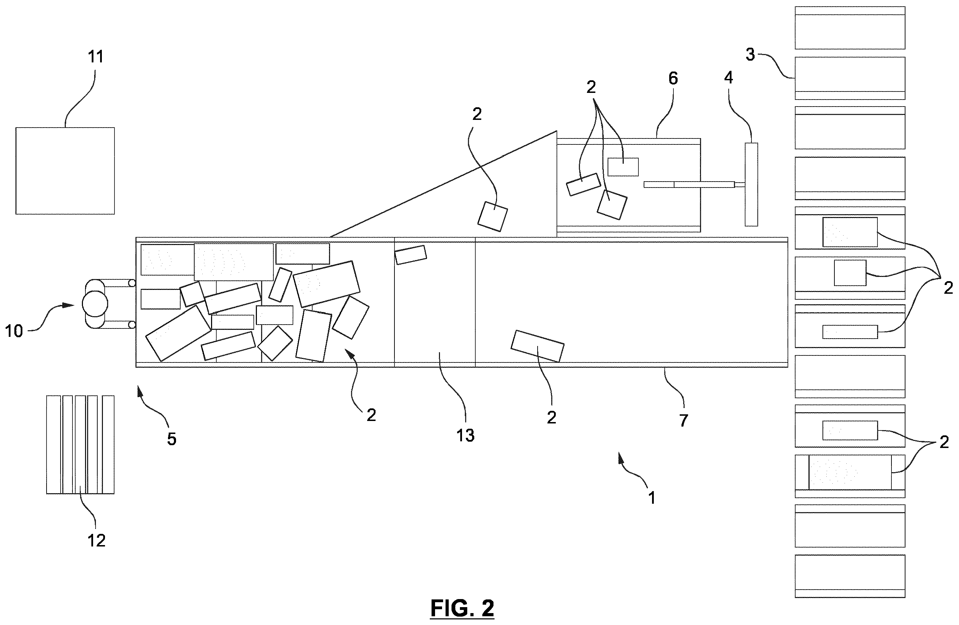

Die in Figur 1 gezeigte Sortierendstelle 10 umfasst eine manuelle Beladung durch Bedienpersonal. Allerdings kann, wie in Figur 2 gezeigt, die Sortierendstelle auch einen Wechselbehälter 11 oder eine Palette 12 aufweisen, die vom Bedienpersonal befüllt oder beladen werden können. Das Befüllen kann auch automatisiert oder teilautomatisiert erfolgen, beispielsweise indem das Befüllen robotergestützt erfolgt und/oder der Abförderer 9 Gegenstände 2 direkt in den Wechselbehälter 11, die Palette 12 oder ein anderes Medium fördert. Weiterhin kann die Sortierendstelle 10 in anderen Ausführungsbeispielen eine Wechselbrücke oder ein Transportmedium umfassen oder als ein solches ausgeführt sein, vorzugsweise als ein Rollbehälter oder ein Sack ausgeführt sein oder einen solchen umfassen.

Die Figur 2 zeigt eine weitere Ausführungsform einer Sortieranlage 1 in einer Draufsicht. Dabei unterscheidet sich die in Figur 2 gezeigte Ausführungsform von der in Figur 1 gezeigten Ausführungsform insbesondere dadurch, dass sie nur einen Liegesorter 3 aufweist und die Übergabeeinrichtung als einfache Rutsche 7 ausgeführt ist. Zudem stellt die Abgabestelle 5 die Sortierendstelle 10 dar.

Für ein verbessertes Fördern der Gegenstände 2 weist die Rutsche 7 der Sortieranlage 1 in Figur 2 zudem ein aktives Förderelement 13 auf. Dieses kann beispielsweise als ein Förderband, ein Kettenförderer oder ein Gurtförderer ausgeführt sein. So erfolgt das Zuführen der Gegenstände an die Abgabestelle 5 beziehungsweise die Sortierendstelle 10 nicht ausschließlich schwerkraftgetrieben, sondern kann, insbesondere bedarfsweise, durch das aktive Förderelement 13 unterstützt werden.

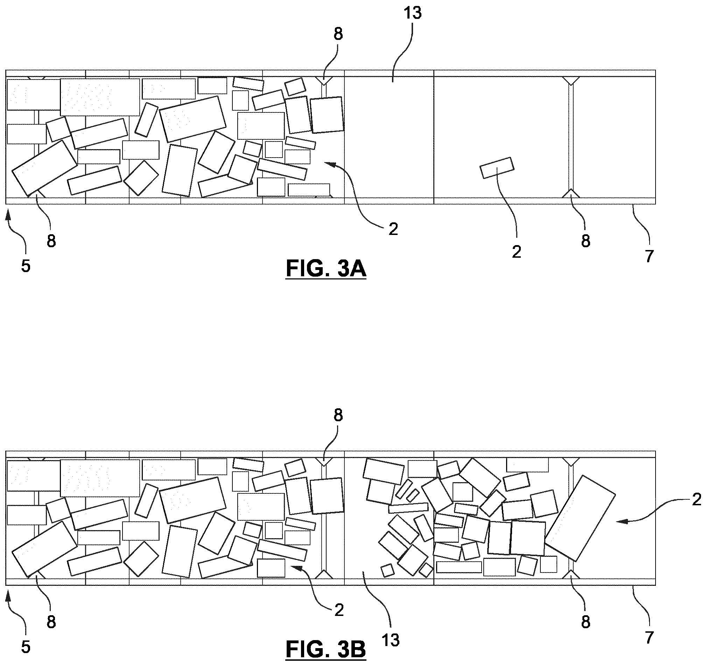

Figuren 3a und 3b zeigen alternative Ausführungsformen der Rutsche 7 aus Figur 2, wobei die Modifikationen auch auf die Wendelrutsche 7 der Figur 1 und andere Übergabeeinrichtungen 7 übertragbar sind. Die Rutsche 7 weist hier eine Füllstandsüberwachung auf, die dazu eingerichtet ist, eine Stückzahl, ein Volumen, eine Fläche oder eine Abmessung mindestens eines von dem Liegesorter 3 oder dem Taschensorter 4 auf die Rutsche 7 abgegebenen Gegenstands 2 zu ermitteln. Hierzu weist die Füllstandsüberwachung drei Sensoreinheiten 8 auf, die als optische Sensoren in Form von Lichtschranken 8 ausgeführt sind. Die Lichtschranken 8 erfassen den Füllstand der Rutsche 7 durch Unterbrechung eines Lichtstrahls. Hierzu sind die Lichtschranken 8 so angeordnet, das die jeweiligen, nicht unterbrochenen Lichtstrahlen über die gesamte Breite der Rutsche 7 reichen. Weitere Ausführungsformen können alternativ oder zusätzlich einen anderen optischen Sensor, einen akustischen Sensor, einen kapazitiven Sensor, einen induktiven Sensor und/oder einen Radarsensor vorsehen.

Basierend auf dem Signal der Lichtschranken 8 kann die Füllstandsüberwachung erkennen, ob die Rutsche 7 leer ist, halb gefüllt ist oder nahezu vollständig belegt ist. Wird keiner der Lichtstrahlen unterbrochen, ist die Rutsche 7 leer. Ist nur der Lichtstrahl der untersten Lichtschranke 8 unterbrochen, ist die Rutsche 7 maximal halb voll. Sind, wie in Figur 3a gezeigt, die Lichtstrahlen der unteren beiden Lichtschranken 8 unterbrochen, ist die Rutsche 7 zumindest halb gefüllt. Sind, wie in Figur 3b gezeigt, die Lichtstrahlen aller Lichtschranken 8 unterbrochen, ist die Rutsche 7 weitgehend mit Gegenständen 2 gefüllt.

Die Füllstandsüberwachung kann dabei ausgebildet und eingerichtet sein, entsprechend dem erfassten Füllstand der Rutsche 7 einen Betrieb der Sortieranlage 1 zu beeinflussen. Beispielsweise kann ein Zwischenpuffern von Gegenständen 2 auf dem Liegeförderer 6 veranlasst werden, ein Antreiben des Liegeförderers 6 angepasst werden und/oder ein Abgeben von Gegenständen 2 durch den Taschenförderer 4 und/oder den Liegeförderer 3 gesteuert werden. Ist die Rutsche 7 nahezu voll, kann die Füllstandsüberwachung beispielsweise veranlassen, dass Gegenstände 2 von dem Taschensorter 4 und/oder dem Liegesorter 3, zumindest temporär, zu anderen Abgabestellen 5 gefördert werden.

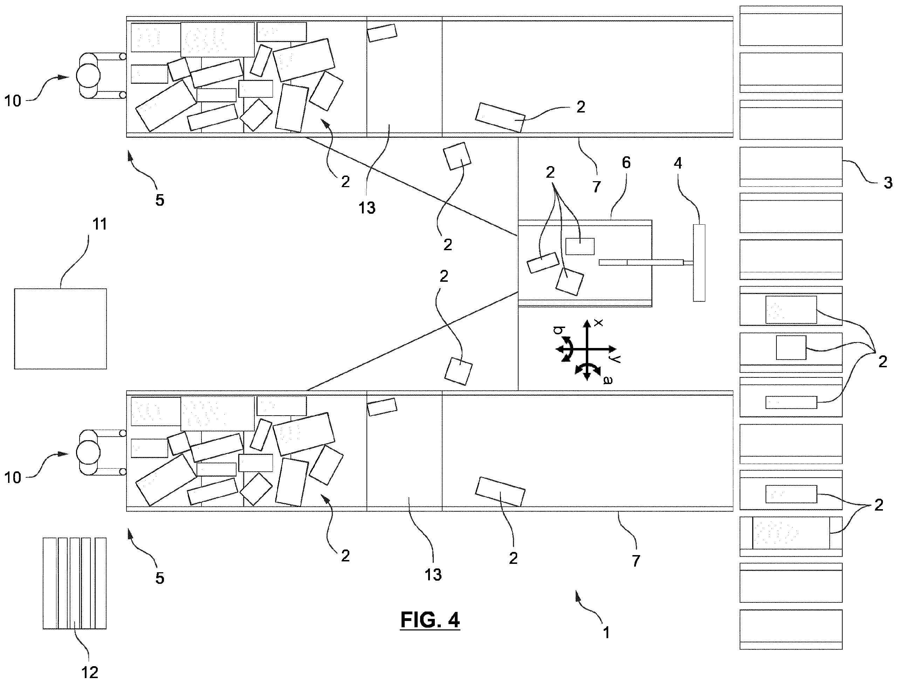

Figur 4 zeigt ein weiteres Ausführungsbeispiel einer Sortieranlage 1 in einer Draufsicht. Gegenüber dem in Figur 2 gezeigten Ausführungsbeispiel, umfasst die Sortieranlage 1 zumindest eine weitere Abgabestelle 5. Dabei weist auch die weitere Abgabestelle 5 den Liegeförderer 6 auf, so dass Gegenstände des Taschensorters 4 beiden Abgabestellen 5 durch den Liegeförderer 6 zugeführt werden können. Hierzu ist der Liegeförderer 6 hier zwischen den als Übergabeeinrichtungen 7 ausgeführten Abgabestellen 5 angeordnet. Der Liegeförderer 6 kann dabei ausgebildet sein, transversal, in einer Längsrichtung y und/oder in einer Querrichtung x, verstellbar zu sein. Alternativ oder zusätzlich kann der Liegeförderer 6 ausgebildet sein, rotatorisch, in einer Drehrichtung b um eine Längsachse und/oder in einer Drehrichtung a um eine Querachse, verstellbar zu sein. Weiterhin kann vorgesehen sein, dass der Liegeförderer 6 höhenverstellbar ausgeführt ist und/oder in einer horizontalen Ebene um eine Vertikalachse rotatorisch verstellbar ist.

Die Sortieranlage 1 der Figur 4 zeichnet sich durch eine besonders flexible Zuführung von Gegenständen 2 des Taschenförderers 4 an verschiedene Abgabestellen 5 aus. Durch eine Verstellbarkeit des Liegeförderers 6 kann die Zuführung zudem vereinfacht werden. Insbesondere bei der Möglichkeit, den Liegeförderer 6 um eine Querachse und/oder eine Längsachse, beispielsweise in der Drehrichtung a und/oder der Drehrichtung b, zu neigen beziehungsweise zu kippen, kann ein Gegenstand 2 von dem Liegeförderer 6 direkt an eine Abgabestelle 5 abgegeben werden, ohne dass eine zusätzliche Verbindung, beispielsweise in Form einer Rutsche oder schiefen Ebene, zwischen dem Liegeförderer 6 und der Abgabestelle 5 erforderlich ist.

Alternativ oder zusätzlich kann in weiteren Ausführungsbeispielen der Liegeförderer 6 eine Füllstandsüberwachung aufweisen, die dazu eingerichtet ist, eine Stückzahl, ein Volumen oder eine Abmessung mindestens eines von Taschensorter 4 an den Liegeförderer 6 abgegebenen Gegenstands 2 zu ermitteln. Auch die Füllstandsüberwachung des Liegeförderers 6 kann dazu eingerichtet sein oder dazu genutzt werden, einen Betrieb der Sortieranlage 1 an den Füllstand des Liegeförderers 6 anzupassen.

In weiteren Ausführungsbeispielen kann der Liegeförderer 6 einen Zwischenspeicher für die Aufnahme mehrerer von dem Taschensorter 4 auf den Liegeförderer 6 abgegebener Gegenstände 2 aufweisen. Auch kann der Liegeförderer 6, vorzugsweise der Zwischenspeicher, eine Kammer zur Aufnahme von Gegenständen 2 aufweisen, wobei die Kammer einen verschließbaren Auslass aufweist. Der verschließbare Auslass ist bevorzugt oberhalb eines Fördermittels, vorzugsweise eines Förderbands, eines Kettenförderers oder eines Gurtförderers, des Liegeförderers 6 angeordnet. So können, insbesondere basierend auf einem Füllstand des Liegeförderers 6 und/oder der Übergabeeinrichtung 7, Gegenstände von dem Taschensorter 4 in die Kammer zur Zwischenpufferung abgegeben werden, wobei der Verschluss, ebenfalls insbesondere basierend auf einem Füllstand des Liegeförderers 6 und/oder der Übergabeeinrichtung 7, geöffnet wird, um die Gegenstände 2 aus der Kammer auf den Liegeförderer 6 schwerkraftgetrieben zu entleeren.

Alternativ oder zusätzlich kann in einer weiteren Ausführungsform der Sortieranordnung ein dritter Sorter, vorzugsweise ein mobiler Roboter, insbesondere ein fahrerloses Transportfahrzeug, vorgesehen sein, wobei der dritte Sorter ausgebildet und eingerichtet ist, einen Gegenstand 2 zu wenigstens einer der Mehrzahl Abgabestellen 5 zu transportieren, und mit der wenigstens einen Abgabestelle 5, vorzugsweise mit einer Übergabeeinrichtung 7 der wenigstens einen Abgabestelle 5, zumindest temporär verbindbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Sortieranordnung
- 2: Gegenstand
- 3: Erster Sorter
- 4: Zweiter Sorter
- 5: Abgabestellen
- 6: Liegeförderer
- 7: Übergabeeinrichtung
- 8: Sensoreinheit
- 9: Abförderer
- 10: Sortierendstelle
- 11: Wechselbehälter
- 12: Palette
- 13: Aktives Förderelement
- a: Drehrichtung um eine Querachse
- b: Drehrichtung um eine Längsachse
- x: Querrichtung
- y: Längsrichtung

## Patentansprüche

1. Sortieranordnung (1) für das Sortieren von Gegenständen (2), insbesondere Postsendungen, wobei die Sortieranordnung (1) einen ersten Sorter (3), vorzugsweise einen Liegesorter, einen zweiten Sorter (4), vorzugsweise einen Taschensorter mit einer Mehrzahl Lastaufnahmemitteln, und eine Mehrzahl Abgabestellen (5) aufweist, wobei der erste Sorter (3) zur Abgabe von Gegenständen (2) mit den Abgabestellen (5) verbunden ist, **dadurch gekennzeichnet, dass** wenigstens eine der Abgabestellen (5) einen Liegeförderer (6) aufweist und der zweite Sorter (4) für die Abgabe von Gegenständen (2) an die Abgabestelle (5) mit dem Liegeförderer (6) verbunden ist.

2. Sortieranordnung (1) nach Anspruch 1, bei der der zweite Sorter (4) oberhalb des Liegeförderers (6) geführt und dazu eingerichtet ist, einen an die Abgabestelle (5) abzugebenden Gegenstand (2) auf den Liegeförderer (6) abzuwerfen.

3. Sortieranordnung (1) nach Anspruch 1 oder 2, bei der der Liegeförderer (6) ein aktiver Förderer ist, vorzugsweise ein motorisch angetriebener Förderer, wobei der Liegeförderer (6) besonders bevorzugt kontinuierlich oder diskontinuierlich angetrieben ist.

4. Sortieranordnung (1) nach einem der vorangegangenen Ansprüche, bei der der Liegeförderer (6) ein Förderband, ein Kettenförderer, eine Rollenbahn oder ein Gurtförderer ist oder aufweist.

5. Sortieranordnung (1) nach einem der vorangegangenen Ansprüche, bei der wenigstens eine weitere der Abgabestellen (5) den Liegeförderer (6) aufweist und der Liegeförderer (6) ausgebildet und eingerichtet ist, der wenigstens einen Abgabestelle (5) und der wenigstens einen weiteren Abgabestelle (5) Gegenstände (2) zuzuführen.

6. Sortieranordnung (1) nach einem der vorangegangenen Ansprüche, bei der der Liegeförderer (6) eine Füllstandsüberwachung aufweist, die dazu eingerichtet ist, eine Stückzahl, ein Volumen, eine Fläche oder eine Abmessung mindestens eines von dem zweiten Sorter (4) auf den Liegeförderer (6) abgegebenen Gegenstands (2) zu ermitteln.

7. Sortieranordnung (1) nach einem der vorangegangenen Ansprüche, bei der der Liegeförderer (6), vorzugsweise ein Zwischenspeicher des Liegeförderers (6), eine Kammer zur Aufnahme von Gegenständen (2) aufweist, wobei die Kammer einen verschließbaren Auslass aufweist.

8. Sortieranordnung (1) nach Anspruch 7, bei der der verschließbare Auslass oberhalb eines Fördermittels, vorzugsweise eines Förderbands, eines Kettenförderers, einer Rollenbahn oder eines Gurtförderers, des Liegeförderers (6) angeordnet ist.

9. Sortieranordnung (1) nach einem der vorangegangenen Ansprüche, bei der mindestens eine der Abgabestellen (5) eine Übergabeeinrichtung (7), vorzugsweise eine Rutsche, insbesondere eine Wendelrutsche, aufweist oder als eine Übergabeeinrichtung (7) ausgeführt ist, wobei sowohl der erste Sorter (3) als auch der zweite Sorter (4) für die Abgabe von Gegenständen (2) mit der Übergabeeinrichtung (7) verbunden sind.

10. Sortieranordnung (1) nach Anspruch 9, bei der der Liegeförderer (6) für die Abgabe von Gegenständen (2) mit der Übergabeeinrichtung (7) verbunden ist.

11. Sortieranordnung (1) nach einem der vorangegangenen Ansprüche, bei der die Abgabestelle (5), insbesondere eine Übergabeeinrichtung (7), eine Füllstandsüberwachung aufweist, die dazu eingerichtet ist, eine Stückzahl, ein Volumen, eine Fläche oder eine Abmessung mindestens eines von dem ersten Sorter (3) und/oder dem zweiten Sorter (4) an die Abgabestelle (5) abgegebenen Gegenstands (2) zu ermitteln.

12. Sortieranordnung (1) nach einem der vorangegangenen Ansprüche, insbesondere in Verbindung mit Anspruch 6 oder Anspruch 11, bei der eine Füllstandsüberwachung eine Sensoreinheit (8) aufweist, die insbesondere als ein optischer Sensor, ein akustischer Sensor, ein kapazitiver Sensor, ein induktiver Sensor und/oder ein Radarsensor ausgeführt ist oder einen solchen umfasst.

13. Sortieranordnung (1) nach einem der vorangegangenen Ansprüche, die mindestens einen Abförderer (9) aufweist, vorzugsweise einen Auslegerförderer, besonders bevorzugt einen Gurtförderer, der dazu eingerichtet ist, von dem ersten Sorter (3) und dem zweiten Sorter (4) an einer der Abgabestellen (5) abgegebene Gegenstände (2) zu einer Sortierendstelle (10) zu befördern.

14. Sortieranordnung (1) nach Anspruch 13, bei der die Sortierendstelle (10) als eine Wechselbrücke, ein Wechselbehälter und/oder ein Transportmedium ausgeführt ist oder umfasst, vorzugsweise als ein Rollbehälter oder ein Sack ausgeführt ist oder einen solchen umfasst.

15. Sortieranordnung (1) nach einem der vorangegangenen Ansprüche, die einen dritten Sorter, vorzugsweise einen mobilen Roboter, insbesondere ein fahrerloses Transportfahrzeug, aufweist, wobei der dritte Sorter ausgebildet und eingerichtet ist, einen Gegenstand (2) zu wenigstens einer der Mehrzahl Abgabestellen (5) zu transportieren, und mit der wenigstens einen Abgabestelle (5), vorzugsweise mit einer Übergabeeinrichtung (7) der wenigstens einen Abgabestelle (5), zumindest temporär verbindbar ist.

16. Verfahren zum Sortieren von Gegenständen (2), vorzugsweise Postsendungen, insbesondere mit einer Sortieranordnung (1) nach einem der vorangegangenen Ansprüche, bei dem
- mit einem ersten Sorter (3) Gegenstände (2) entsprechend ihrem Sortierziel an einer einer Mehrzahl mit dem ersten Sorter (3) verbundener Abgabestellen (5) abgegeben werden, und
- mit einem zweiten Sorter (4) Gegenstände (2) entsprechend ihrem Sortierziel an einer der Mehrzahl Abgabestellen (5) abgegeben werden,
**dadurch gekennzeichnet, dass** das Sortieren mit dem zweiten Sorter (4) das Abgeben des in einem der Lastaufnahmemittel des zweiten Sorters (4) gehaltenen Gegenstands (2) auf einen Liegeförderer (6) aufweist.

17. Verfahren nach Anspruch 16, bei dem Gegenstände (2) des ersten Sorters (3) und des zweiten Sorters (4), welche dasselbe Sortierziel aufweisen, an derselben Abgabestelle (5) abgegeben werden.

18. Verfahren nach Anspruch 16 oder 17, bei welcher der Liegeförderer (6) diskontinuierlich angetrieben und der erste Sorter (3) und der zweite Sorter (4) vorzugsweise kontinuierlich betrieben werden.

19. Verfahren nach Anspruch 18, bei dem der Liegeförderer (6) abhängig von einem Füllstand von Gegenständen (2) auf dem Liegeförderer (6) angetrieben wird.

20. Verfahren nach einem der Ansprüche 16 bis 19, bei dem die Gegenstände (2) von dem zweiten Sorter (4) in eine Kammer mit einem verschließbaren Verschluss zur Zwischenpufferung abgegeben werden, wobei der Verschluss geöffnet wird, um die Gegenstände (2) aus der Kammer auf den Liegeförderer (6) schwerkraftgetrieben zu entleeren.

21. Verfahren nach einem der Ansprüche 16 bis 20, bei dem das Abgeben der Gegenstände (2) mit dem zweiten Sorter (4) an eine der Abgabestellen (5) das Fördern und Einschleusen der Gegenstände (2) in eine Übergabeeinrichtung (7) der Abgabestelle (5) aufweist.
